# EUROPEAN PATENT SPECIFICATION

(11) **EP 3 601 812 B1**
(45) Date of publication and mention of the grant of the patent: **18.05.2022**
(21) Application number: 18714498.5
(22) Date of filing: 28.03.2018
(51) Int. Cl.: F16B 5/01, F16B 2/00, F16B 13/14, F16B 37/04

(54) **INSERT FOR A COMPOSITE STRUCTURE**
EINSATZ FÜR EINE VERBUNDSTRUKTUR
INSERT POUR STRUCTURE COMPOSITE

(30) Priority: 28.03.2017 CH 4122017
(43) Date of publication of application: 05.02.2020
(73) Proprietor: RUAG Schweiz AG, 6032 Emmen (CH)
(72) Inventor: NÄGELI, Dominik, 8406 Winterthur (CH)
(74) Representative: Rentsch Partner AG
(86) International application number: PCT/EP2018/058001
(87) International publication number: WO 2018/178193

(56) References cited:
- WO-A1-2014/146740
- DE-A1-102007 021 341
- US-A1- 2002 050 105

## Description

### FIELD OF THE INVENTION

The present invention is directed to an insert, in particular to an insert to be used in panels with core structures made from a cellular solid, such as honeycomb panels. The invention is also directed to an insert system comprising such an insert and a panel. The present invention is further directed to a method to produce such an insert system. The present invention is further directed to a machine system to produce an insert system and to a working head for such a machine system. The present invention is further directed to a magazine to store inserts and to be used for such a machine system. The present invention is further directed to an adhesive dispenser to be used for such a machine system.

### BACKGROUND OF THE INVENTION

Several types of insert systems suited for being used in panels with core structures made from cellular solids are known.

US345282 was published on 23.12.1969 on behalf of Hughes Aircraft Company and shows an expandable insert for solid and cellular structures, like honeycomb constructions. The insert disclosed comprises a specific amount of expandable bonding agent that is specifically or precisely measured. In one embodiment disclosed in US345282, the insert comprises a cylindrical casing which has a plurality of apertures spaced about its periphery. An attachment as a nut is secured centrally within the casing. Within the casing, an expandable bonding agent is arranged. In order to install the insert in a cellular structure, the insert is placed within a preformed hole in the cellular structure. After that, a catalyzing agent, namely heat, is applied to the insert which causes the expandable bonding agent to expand and through the apertures in the casing and hence extrude into the peri-insert cells opened by the hole in the cellular structure. According to the publication, the bonding means then expands until it fills completely all ruptured cells. A disadvantage of such an insert is that heat or another catalyst has to be induced which may affect the surrounding cellular structure. As well, in order to completely fill all ruptured cells a certain minimum volume of expandable bonding agent is needed which will stay within the case and hence adds to the total weight of the insert, although it does not contribute to fixation of the insert in the surrounding cellular structure.

WO2016102305A1 was published on 30.06.2016 on behalf of Alema Automation and discloses a feeder mechanism for feeding mechanical fasteners, such as rivets, screws, bolts and similar. The application shows a feeder mechanism that has a transport means for transporting the mechanical fasteners preferably by pressurized air and a stopping and aligning unit with a stopping plate to decelerate transported fasteners arranged downstream of the transport means. According to the application the transport means allows feeding of fasteners at high speed and frequencies, while the stopping and aligning unit reduces damaging of the mechanical fasteners by decelerating them with the stopping plate. WO2008124353A1 was published on 16 October 2008 on behalf of The Boeing Company and discloses an apparatus for installing fasteners in a workpiece and is mounted for computer controlled movement over the workpiece. According to the application the apparatus has all entities on-board that are needed to operate autonomously without external connections, including tools, fasteners, drives and controls. As well it may include on-board power supply for powering the tools, drives and controls. In addition it comprises a supply of fasteners by means of an on-board replaceable cassette. According to the application, an on-board fastener transferring device transfers individual fasteners from the cassette to the tools. Therefore the apparatus comprises a base on which a supply of fasteners is mounted as well as means for mounting the base for movement over the surface of the workpiece. As well, at least one tool is mounted on the base for installing the fasteners in the workpiece along an installation path. In addition, controls are mounted on the base for controlling the operation of the tool. The type of apparatus disclosed in WO2008124353A1 is intended to be used as a robot that is crawling essentially autonomously along the fuselage of aircraft in order to join the outer skin with the fuselage frames. The various components necessary to fulfill this task make the apparatus relatively heavy. Consequently such an apparatus can only work autonomously on structures that have a relatively high structural competence or in combination with an auxiliary device that comprises a relatively high stiffness.

WO14060027A1, WO14146739A1, WO14146740A1 have been published, which all disclose inserts for being mounted in panels using adhesives. DE102007021341A1 published on 13.11.2008 in the name of Fischerwerke GmbH & Co. KG, discloses a plastic closure and mounting element for closing a hole and creating a mounting structure in a lightweight building board. The element comprises a self-closing membrane valve formed by a cross-wise slit flexible membrane that is held in or forms part of a surrounding socket. A hardenable substance can be injected via a nozzle through the membrane into the hollow volume of the lightweight building board. Alternatively, the element comprises a self-closing non-return valve for injecting the hardenable substance. The socket can have at its outer circumference a saw-tooth profile or snapping design or arresting design or self-cutting thread design for improved mounting of the element in the lightweight building board.

US2002/050105A1, published on 02.05.2002 in the name of Price, Gess & Ubell, discloses a metallic spacer installable in a sandwich panel for providing a mounting structure for a fastener. The spacer can have a lower cylindrical surface with serrations for enhanced friction fit with the lower panel face. An outside face of an intermediate body portion of the spacer can have an annular concave groove for weight reduction of the spacer and for improved anchoring of the spacer within the potting compound. An outside face of a head portion of the spacer can also have a V-shaped groove to carry and support an outer sealant.

### SUMMARY OF THE INVENTION

Most inserts foreseen to be mounted into composite panels used in aviation have the drawback that automated mounting is hardly possible due to several reasons.

A first reason is that composite panels used in aviation typically comprise materials that show very special mechanical behavior and/or require very specific processing. This in particular holds true for sandwich-type panels that comprise core materials made from cellular solids, such as an open-cell or closed-cell solids like e.g. foam materials or honeycomb materials. As such, a panel may e.g. comprise a core made from a plastic material or a fiber reinforced plastic material. In panels intended to be used in aviation (e.g. for aircraft cabin flooring and interiors), materials comprising aramid and/or para-aramid and/or meta-aramid fibers are widespread. As well, also the cover sheets of composite panels which may be made from the same materials (in particular from aramid and/or para-aramid and/or meta-aramid) like the core structures or from a different type of material may anticipate automated mounting of inserts. Furthermore, the composite panels as used in aviation in many cases comprise special types of coatings, including different types of varnish, glass, wood, bamboo as well as stone applied as veneer. When inserting inserts in panels made from these materials, the panels' mechanical response to the insertion process can typically only be controlled (respectively forecasted) to a very limited extent. A major reason for this is the type of material the panels are made from, which typically show a nonlinear and sometimes even discontinuous mechanical response during mounting of an insert.

Another reason that anticipates automated mounting of inserts is that most panels used in aviation are typically thinner than most panels used e.g. in satellites. For inserts to be mounted in e.g. sandwich panels this increases the influence of the cover sheets on insert stability. As well, the spatial dimensions of the inserts applied in aviation are in many cases smaller than those of the inserts applied to space structures. Consequently, in many cases the macrostructure of the sandwich panels' core structures is similar or at least in the same size range like the insert. This makes the mechanical response of the panel to insertion of the insert highly dependent on the insert position. Consequently, accurate positioning of inserts in many cases becomes difficult which antagonizes automated mounting of inserts.

Conventionally, inserts are set in a pre-produced opening in the panel and subsequently an adhesive agent is injected in the peri-insert region space in order to fill any free volume and hence augment the structural stability of the insert-panel structure. However, such injection of adhesive agent usually results in the adhesive agent contacting both cover sheets of a sandwich panel. This may affect the optical appearance of the panel in particular in two ways. First, adherence of the adhesive agent to a cover sheet may induce a change in color of the cover sheet, respectively of a coating (e.g. varnish) of a cover sheet. Second, injection of the adhesive agent may cause the cover sheet to bulge or alternatively the adhesive agent may shrink during hardening and cause an indentation/dent in at least one of the cover sheets. In particular on high quality/gloss surface finishes such bulges or indentions are usually readily noticed by an observer due to the distortion of reflected light, making extensive further treatment necessary. As well, conventional injection of adhesive agent typically requires relatively large amounts of adhesive agent which - particularly in honeycomb panels - may flow to regions where it does not efficiently contribute to insert stability/anchorage.

Another reason impeding automated mounting of inserts in the above-mentioned types of panels is that due to the specific mechanical behavior of these panels conventional inserts do not provide sufficient initial insert stability, making it necessary to use auxiliary means in order to keep them in place during curing of an adhesive agent. This typically impedes mounting of multiple inserts and hence slows down production of panels comprising multiple inserts.

An insert according to the present invention typically comprises a base and an outer skirt extending from the base, thereby forming a chamber. The outer skirt is provided with a first inner skirt surface and a first outer skirt surface. According to the present invention, the insert comprises at least one fixation means arranged at the first outer skirt surface and configured to interact (respectively interfere in a defined manner) with a panel when inserted in an opening of the panel in order to increase initial insert stability. Thus, the fixation means interfering with the panel and the outer skirt interfering with adhesive agent in the peri-insert region of a panel provide sufficient initial insert stability to maintain insert position and alignment during curing/hardening of the adhesive agent and finally obtain long-term insert stability.

For some applications, at least a part of the skirt may have a rotationally symmetrical shape. Good results may be obtained if at least a part of the skirt has a cylindrical or a conical shape.

Good results can be obtained if the fixation means is arranged at the region of the outer skirt which is adjacent to the base. Thus, the fixation means may interfere with a first cover sheet of a panel which allows to obtain very high initial insert stability. Such an embodiment of an insert according to the invention is particularly advantageous for being used in panel that comprise relatively core structures with relatively large cells.

According to a variation of the invention, the fixation means may comprise at least one thickening which at least partially protrudes from the first outer skirt surface. Hence an interference-fit may be obtained. For certain types of panels multiple thickenings may be are arranged circumferentially distributed around the outer skirt surface of the insert. An insert that offers very good initial- and long-term stability in panels having relatively sensitive cover sheets may be obtained if the fixation means comprises multiple thickenings that protrude from the first outer skirt surface and are arranged circumferentially distributed around the first outer skirt surface whereby the protrusions are arranged and formed such that they do not induce any critical stress the peri-insert region of the cover sheet, in particular do not produce a critical notch effect. The shape and material of the thickening, respectively the thickenings, may be adapted to the thickness and the material of the cover sheet of a plane the insert is to be inserted in.

Alternatively or in addition, the fixation means may comprise at least one recess, which may extend in circumferential direction around the first outer skirt surface. For certain types of panels the fixation means may comprise a knurl pattern and/or a corrugation, which may e.g. be made by an embossing process or by molding.

For certain types of panels, in particular for panels that are mechanically particularly sensitive, the fixation means may be at least partially made from a polymer material. In order to obtain particularly high initial insert stability, the polymer material may comprise an adhesive agent. Alternatively or in addition, the polymer material may be a silicone. The adhesive agent may be configured to obtain an at least temporal adhesive bonding between the insert and the panel to be mounted in. To facilitate insertion of the insert a non-permanent adhesive agent may be applied. As well, the adhesive agent may be thermoactive. Good results may be obtained if the polymer material is arranged as a coating layer on the first outer skirt surface.

For certain applications, the fixation means may comprise a coating layer that has a friction coefficient which is higher than the friction coefficient of the non-coated part of the first outer skirt surface. Hence, for certain types of panels insertion depth of an insert can be better controlled.

Good results may be obtained if at least part of the fixation means is integrally made with the outer skirt. Alternatively, or in addition at least part of the fixation means may be made from a different material than the outer skirt. The fixation means may be produced by means of an injection molding process.

For some applications, at least one first groove may be arranged at the first outer skirt surface closer to the free end of the outer skirt than to the base end of the outer skirt which is arranged at the base. Hence, initial as well as long-term insert stability may be significantly be improved.

According to a variation of the invention, the at least one outer skirt comprises at least one slot arranged at the free end of the outer skirt and extending from the inner skirt surface to the outer skirt surface. Good results may be obtained if multiple slots are arranged circumferentially distributed around the outer skirt surface. Thus, an insert may be obtained which can be produced at low costs as well as it offers good resistance against torsional load and allows easy mounting. Alternatively or in addition, the outer skirt may comprise at least one opening arranged a distance apart from the free end of the outer skirt and extending from the inner skirt surface to the outer skirt surface to increase pull-out strength when combined with adhesive agent.

For some applications, the insert may comprise an inner skirt that extends from the base and is arranged in the chamber and spaced apart a distance from the outer skirt. According to an embodiment of the invention, the portions of the outer skirt arranged between the multiple slots form resilient tongues. Thus, centering of the insert during insertion can be facilitated.

For some applications the insert may comprise at least one second circumferential groove arranged at an outer surface of the inner skirt and extending in circumferential direction of said inner skirt at least along a part of the circumference.

The present invention is also directed to an insert system. Such an insert system typically comprises a panel which has a core structure and a first cover sheet that at least partially covers the core structure and an insert as described herein, the insert being mounted in an opening in the panel. Good results may be obtained if the insert is mechanically interconnected with the panel by means of an interference-fit between the fixation means and the first cover sheet. Good long term insert stability may be obtained if the opening comprises an undercut arranged beneath the first cover sheet.

In the context of the present invention also a method for producing an insert system is described herein, without being covered by the claimed invention. Such a method typically comprises the steps of: providing a panel comprising a core structure and a first cover sheet that at least partially covers the core structure, the first cover sheet inducing an opening in the panel. Providing a specified amount of an adhesive agent into the opening. Inserting an insert into the opening. Establishing a mechanical interconnection between the fixation means and the first cover sheet. As the outer skirt of the insert protrudes in the adhesive agent present in the opening and the fixation means interferes with the panel, an insert system produced according to such a method has a particularly high initial insert stability.

Further, a working head for an insert machine system to process an insert to be mounted in a panel is described, without being covered by the claimed invention. Such a working head typically comprises at least one insert holding means to bear at least one insert to be mounted in the panel. Further it comprises at least one insert receptive port configured to receive at least one insert to be mounted in the panel and at least one guidance means configured to transport an insert received at the at least one insert receptive port to the at least one insert holding means. In combination with an insert that provides high initial insert stability as described herein, such a working head allows very efficient mounting of even very high numbers of inserts. However, such a working head may also be used for other types of inserts.

A working head may be provided that allows a particularly efficient mounting of inserts. Such a working head typically comprises at least one insert holding means to bear at least one insert to be mounted in the panel and at least one insert receptive port configured to receive at least one insert to be mounted in the panel and at least one guidance means configured to transport an insert received at the at least one insert receptive port to the at least one insert holding means. Hence, the total amount of movements of the working head for mounting multiple inserts can be minimized.

For some applications the working head may comprise a working head carrier with which the at least one insert holding means and the at least one insert receptive port and the at least one guidance means are mechanically interconnected.

The working head carrier may comprise a mechanical coupling means configured to mechanically interconnect the working head carrier with a mating coupling means of an actuator of a machine system in a detachable manner. Hence, if required, a working head may easily be replaced for maintenance or adapted for an alternate modus operandi. A variation of a working head may comprise an adhesive dispenser unit configured to provide a specified amount of adhesive agent to an opening of a panel and/or a specified amount of adhesive agent to an insert to be mounted in an opening of a panel. The adhesive dispenser unit may be detachably mechanically interconnected with the working head carrier.

In order to receive inserts to be mounted, the working head may comprise a mechanical insert coupling means which is configured to be mechanically interconnected to a magazine containing multiple inserts configured to provide inserts to the at least one insert receptive port. Alternatively or in addition the mechanical insert coupling means may be configured to be mechanically interconnected to an insert conveying means configured to provide inserts to the at least one insert receptive port. According to a variation of the invention, the working head comprises at least one tool to induce an opening in a panel an insert is to be mounted in.

Further, a magazine for storing inserts to be mounted in a composite panel is described, without being covered by the claimed invention. Such a magazine typically comprises at least one storage part configured for storing multiple inserts while having a specific alignment and at least one mechanical coupling means configured to be mechanically interconnected with a mating mechanical coupling means of a consumer device. A magazine typically further comprises at least one insert delivery port configured to deliver an insert from the storage part to an insert receptive port of a consumer device such that the insert has a specified alignment.

Good results may be obtained if the magazine comprises a biasing means inside the storage part for supporting the transfer of the inserts from the storage part through the delivery port into an insert receptive port of a consumer device. A first magazine as described herein may be comprised by a magazine system, whereby the at least one storage part of the first magazine is arranged to store a first type of insert. The magazine system further comprises a second magazine as described herein, whereby the at least one storage part of the second magazine is arranged to store a second type of insert that differs (e.g. in shape and/or dimensions and/or materials) from the first type of insert. The at least one mechanical coupling means of the first magazine and the at least one mechanical coupling means of the second magazine are configured to be mechanically interconnected with the same type of mechanical coupling means of a consumer device and the at least one insert delivery port of the first magazine and the at least one insert delivery port of the second magazine is configured to be mechanically interconnected with the same type of insert receptive port of a consumer device.

Further, an adhesive dispenser unit for dispensing an adhesive agent is described, without being covered by the claimed invention, J Z comprising an adhesive dispenser carrier comprising a mechanical interconnection interface to mechanically interconnect the adhesive dispenser unit with a working head carrier. The adhesive dispenser unit typically also comprises at least one first fluidic port configured to be fluidically interconnected to a source of a first adhesive agent and at least one nozzle to dispense the first adhesive agent.

For some types of adhesive agents, the adhesive dispenser unit may comprises a second fluidic port to be interconnected to a source of a second adhesive agent. Good results may be obtained if the adhesive dispenser unit comprises a mixing chamber that is configured to intermix a first adhesive agent with a second adhesive agent and provide the mixture to the nozzle. For some applications, the first and/or the second fluidic port may be interconnected to a storage tank containing the first respectively the second fluidic agent. Such a storage tank may be interconnected with an actuator of a machine system for producing an insert system, as will subsequently be shown. Alternatively the storage tank may be interconnected with a dispenser carrier or the storage tank may be arranged a distance apart from the machine bed and be fluidically interconnected with the adhesive dispenser via fluidic lines.

Further, a machine system for producing an insert system is described, without being covered by the claimed invention, which typically comprises at least one holding device for holding a panel and a first working head displaceable with respect to the panel and configured to receive an insertion tool (displaceable with respect to the panel and configured to support an insert to be inserted in the opening. In a variation of the invention the first working head is arranged at a first actuator. The first actuator may e.g. be a bridge of a CNC-router and/or a robotic arm.

In order to increase performance of a machine system, the machine system may comprise a second working head that is arranged at a second actuator and is displaceable with respect to the first working head. The second actuator may e.g. be a bridge of a CNC-router and/or a robotic arm. The second working head may comprise an opening tool to induce an opening into the panel.

The first working head may be a working head as described herein. For some applications, the working machine may comprise an adhesive dispenser unit that is displaceable with respect to the panel. For some applications the adhesive dispenser unit may be mechanically interconnected with the first working head. Good results may be obtained if the adhesive dispenser unit is an adhesive dispenser unit as described herein.

Good performance may be obtained if the machine system comprises at least one fluid line interconnecting the first or the second fluidic port with at least one adhesive storage tank arranged at a distance apart from the adhesive dispenser device and comprising an adhesive agent or at least one component of a multi-component adhesive agent.

For some applications, the machine system may comprise at least one insert conveying means in order to convey at least one insert from a stationary insert receptive port arranged at a distance apart from the working head to the insert receptive port of the working head. The stationary insert receptive port may be arranged at a fixed position at a distance apart from the holding device. Good results may be obtained if the insert conveying means comprises a tube in which one or multiple inserts to be mounted can be conveyed, e.g. by pressurized air.

Alternatively or in addition, the machine system may comprise at least one magazine as described herein and being arranged at the working head and the insert delivery port being interconnected with an insert receptive port of the working head. For some applications a magazine may be arranged at a distance apart from the working head and the insert delivery port being interconnected with an insert receptive port of the working head by means of an insert conveying means.

Although being particularly advantageous for panels and applications as described above, inserts according to the present invention are not limited to these and hence may also be used for other types of panels, such as panels used for space technology, e.g. panels comprising a core made from a honeycomb structure made from aluminum and cover sheets made from carbon fiber reinforced plastics.

### BRIEF DESCRIPTION OF THE DRAWINGS

The herein described invention will be more fully understood from the detailed description of the given herein below and the accompanying drawings, which should not be considered as limiting to the invention described in the appended claims.

It should be noted that Fig. 12 to 15 show embodiments not covered by the claimed invention but being merely examples suitable for understanding the invention.
- Fig. 1: schematically shows an embodiment of an insert according to the present invention in a perspective view;
- Fig. 2: shows the insert of Fig. 1 in a frontal view;
- Fig. 3: shows section D-D of Fig. 2;
- Fig. 4: schematically shows an embodiment of an insert according to the present invention in a perspective view;
- Fig. 5: schematically shows an embodiment of an insert according to the present invention in a perspective view;
- Fig. 6: schematically shows an embodiment of an insert according to the present invention in a perspective view;
- Fig. 7: schematically shows an embodiment of an insert according to the present invention in a perspective view;
- Fig. 8: schematically shows an embodiment of an insert according to the present invention in a perspective view;
- Fig. 9: schematically shows an embodiment of an insert system according to the present invention in a perspective view;
- Fig. 10: schematically shows a cross-section of an embodiment of an insert system according to the present invention;
- Fig. 11: schematically shows a cross-section of an embodiment of an insert system according to the present invention;
- Fig. 12: schematically shows an embodiment of a working head ;
- Fig. 13: schematically shows an embodiment of a working head
- Fig. 14: schematically shows an embodiment of a machine system in a top view;
- Fig. 15: schematically shows an embodiment of a magazine in a perspective view.

### DETAILED DESCRIPTION OF THE INVENTION

The foregoing summary, as well as the following detailed description of the preferred embodiments, is better understood when read in conjunction with the appended drawings. For the purposes of illustrating the invention, an embodiment that is presently preferred, in which like numerals represent similar parts throughout the several views of the drawings, it being understood, however, that the invention is not limited to the specific methods and instrumentalities disclosed.

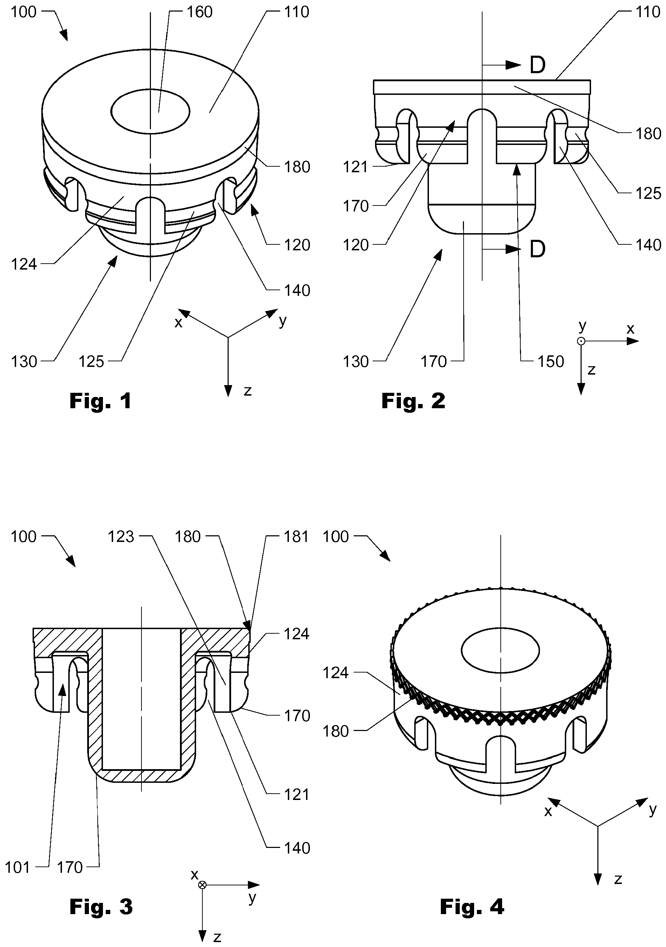

**Figures 1** to **3** show a variation of an insert 100 according to the present invention. The Insert 100 comprises a base 110 and an outer skirt 120that extends from the base 110 to an outer skirt end 121. The base 110 and the outer skirt 120 form a chamber 101, as shown in **Figure 3****.** The outer skirt 120 is provided with a first inner skirt surface 123 and a first outer skirt surface 124. The variation of an insert 100 further comprises a fixation means 180 that is arranged at the first outer skirt surface 124and configured to interfere with a panel (not shown) when inserted in an opening of the panel and thereby increase initial insert stability as will be explained in more detail below. As shown, the fixation means 180 is arranged at the region of the outer skirt 120 which is adjacent to the base 110. In the variation shown, the fixation means 180 comprises a thickening 181 which when the insert 100 is mounted in an opening of a panel interferes with a cover sheet of a panel such that an interference-fit is obtained as will subsequently be shown. The thickening 181 extends in circumferential direction around the first outer skirt surface 124. The variation of an insert 100 shown further comprises multiple slots 140 which are arranged at the free end 121 of the outer skirt 120 and extend from the inner skirt surface 123 to the outer skirt surface 124. The slots are arranged circumferentially distributed around the outer skirt surface 124. The slots 140 improve the distribution of an adhesive agent (not shown) present in an opening of a panel when the insert 100 is inserted in the opening. At the same time, the slots 140 help to establish a form-fit connection between the insert 100 and a panel and thus in particular help to increase the mechanical stability of an insert-panel construct when the insert under torsional loading. The variation of an insert 100 shown further comprises a first groove 125 arranged at the first outer skirt surface 124, closer to the free end 121 of the outer skirt 120 than to the base end of the outer skirt 120 which is arranged at the base 110. The groove 125 extends circumferentially around the insert 100. The groove 125 inter alia increases pull-out strength of the insert 100. Furthermore, the insert 100 comprises guiding means 170 arranged at the free end 1212 of the outer skirt 120, formed as a chamfer which supports insertion of the insert 100 in an opening. The portions 150 of the outer skirt 120 arranged between the multiple slots 140 form resilient tongues which due to the groove 125 have a slightly decreased stiffness when deflected in radial direction of the insert 100, which supports insertion of the insert 100 in an opening even more. The insert further comprises a connection means 160 which in the variation shown is an inner thread configured to receive e.g. a screw (not shown) in order to mechanically interconnect e.g. an equipment device with the insert. However, neither the variations shown nor any other variation of the present invention is limited to such kinds of connection means. As well, the insert has an inner skirt 130which is arranged at the base 110.

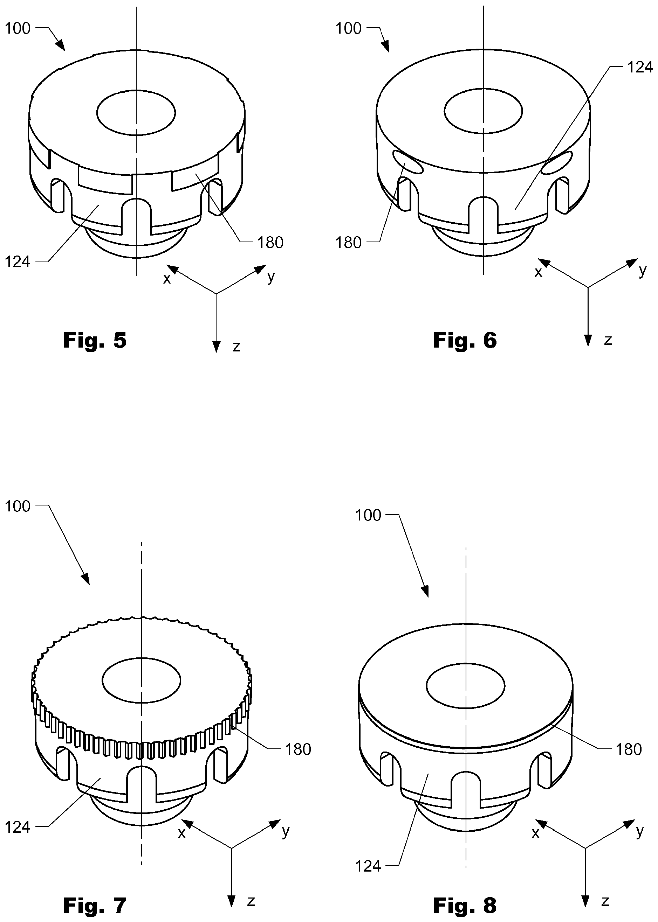

**Figure 4** to **8** schematically show further variations of an insert 100 according to the present invention comprising different types of fixation means 180. In the variation shown in **Figure 4**, the fixation means 180 comprises a knurl, respectively corrugation. In the variation of an insert 100 as schematically shown in **Figure 5**, the fixation means comprises a polymer material that is arranged as a coating layer on the first outer skirt surface 124 and arranged in segments which are arranged circumferentially distributed around the outer skirt surface 124. The polymer material is a silicone which has a friction coefficient which is higher than the friction coefficient of the non-coated part of the first outer skirt surface 124. Hence for certain types of panels, positioning of such a variation of an insert 100 relatively to the panel in z-direction can be better controlled (respectively automated), as well as initial stability of the insert 100 in the panel can be increased. **Figure 6** schematically shows a variation of an insert 100 where the fixation means 180 comprises protrusions essentially have a semi-ellipsoidal shape in order not to produce any notch effect and resulting critical stress the peri-insert region of the cover sheet, while still offering sufficient initial insert stability. **Figure 7** schematically shows another variation of an insert 100 which comprises a fixation means 180 that is formed as a corrugation that extends in circumferential direction around the insert 100. **Figure 8** schematically shows a variation of an insert 100 where the fixation means 180 comprises a recess/groove that extends in circumferential direction around the insert 100. Such a variation of a fixation means 180 may be used for insert 100 to be applied to certain types of panels, as they may support positioning of the insert 100 relatively to the panel.

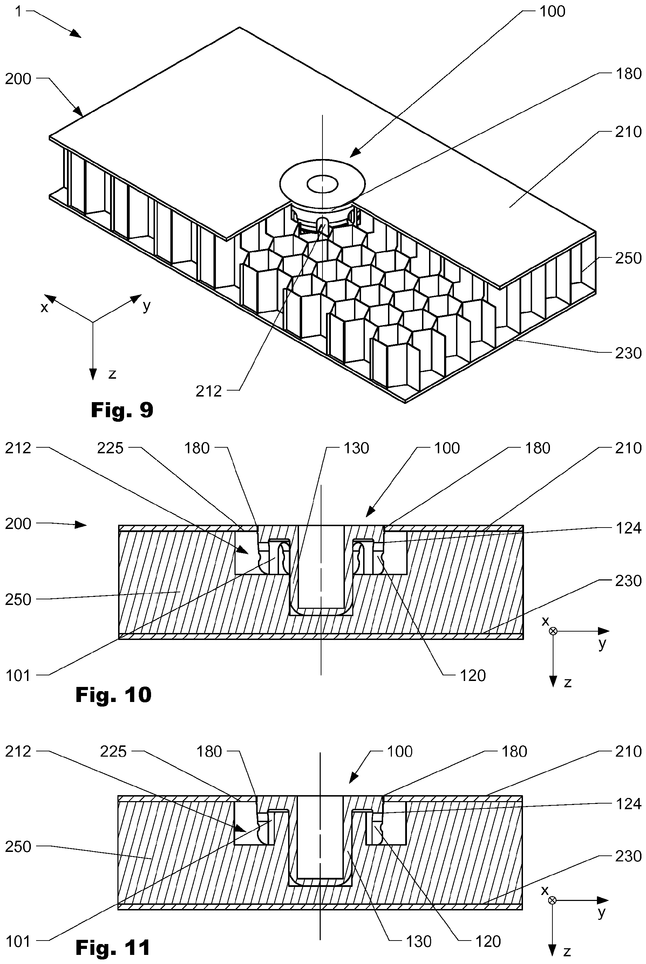

**Figure 9** shows a variation of an insert system 1 according to the present invention comprising a variation of an insert 100 as shown in **Figures 1** to **3**. As well, the insert system 1 comprises a panel 200 which has a core structure 250 that is a honeycomb structure comprising a plurality of cells delimited by cell walls. However, the invention as disclosed herein is not limited to panels with such types of core structures. The panel further comprises a first cover sheet 210 and a second cover sheet 230 that cover the core structure 250. When mounted, the insert 100 is arranged in an opening 212 arranged in the panel 200. In the variation of an insert system 1 as shown, in the peri-insert region of the core 250 an adhesive agent (not shown) is present which interconnects the insert 100 and the panel 200. As schematically shown, the fixation means 180 of the insert 100 interferes with the first cover sheet 210 and thereby induces an interference-fit between the insert 100 and the cover first sheet 210, thereby providing initial insert stability.

**Figure 10** schematically shows a variation of an insert system 1 according to the invention. As shown, when in a mounted state the insert 100 is arranged in an opening 212 arranged in the panel 200. The opening 212 comprises a first segment that is adjacent to the first cover sheet 21 0 and in the variation has an essentially cylindrical shape (if the core structure 250 is made from a honeycomb structure, the hexagonal shape of the honeycombs may overlay said cylindrical shape). The outer skirt 120 is essentially arranged in this first segment of the opening 212. Methods to obtain such openings are well known. The opening 212 further comprises a second segment that extends further towards the second cover sheet 230 and in which the inner skirt of the insert 100 is arranged. In the space between the boundary walls of the opening 212 and the insert 100 an adhesive agent is arranged (not shown in detail) which provides long-term stability (respectively bonding between the insert 100 and the panel 200). As schematically shown, an insert system 1 according to the invention may comprise an opening 212 that has an undercut 225 which increases insert stability, in particular pullout-strength of the insert 100. As schematically shown, the variation of an insert 100 shown has a fixation means 180 that comprises a thickening which in mounted state interacts with the boundaries of the opening 212 in the first cover sheet 210 such that an interference-fit is obtained.

**Figure 11** schematically shows another embodiment of an insert system 1 according to the present invention which is similar to the embodiment shown in **Figure 10****.** In contrast to the embodiment shown in **Figure 10**, the opening is formed such that part of the core structure 250 of the panel 200 is arranged in the chamber 101. Such an embodiment of an insert system 1 may be advantageous for certain types of panels 200.

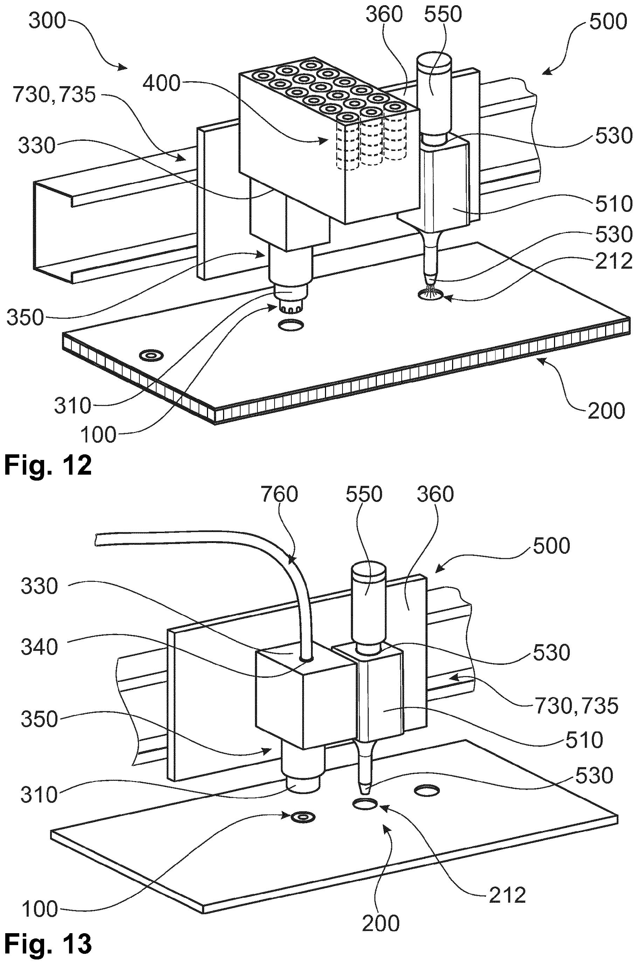

**Figures 12** schematically shows an embodiment of a working head 300 . The working head comprises an insert holding means 310 to bear at least one insert 100 to be mounted in the panel 200. In the embodiment shown the holding means comprises a vacuum system to bear the insert 100 during mounting. The working head 300 further comprises an insert receptive port 330 (not shown in detail) which is configured to receive inserts 100 to be mounted in the panel 200 from a (detachable) magazine 400. The working head 300 further comprises a guidance means 350 configured to transport an insert 100 received at the insert receptive port 330 to the insert holding means 310. The working head 300 further comprises a working head carrier 360 with which the insert holding means 310 and the receptive port 330 and the guidance means 350 are mechanically interconnected. The working head carrier 360 comprises a mechanical coupling means which is configures to mechanically interconnect the working head carrier 360 with a mating coupling means of an actuator 730, 735 of a machine system (not shown) in a detachable manner. Hence, the working head 300 can be easily replaced e.g. for maintenance of the working head or conversion of a machine system. In addition, the embodiment of a working head 300 shown comprises an adhesive dispenser unit 500 for dispensing an adhesive agent to an opening 212 in the panel 200. The embodiment of an adhesive dispenser unit 500 shown comprises an adhesive dispenser carrier 510 which has a mechanical interconnection interface to mechanically interconnect the adhesive dispenser unit 500 with the working head carrier 360. As well, the adhesive dispenser unit 500 comprises a first fluidic port which is fluidically interconnected with a storage tank 550 that serves as a source of an adhesive agent. The adhesive dispenser unit 500 further comprises a nozzle 530 configured to dispense the adhesive agent to openings 212 in the panel 200.

**Figure 13** shows an embodiment of a working head 300 which is similar to the one shown in **Figure 12****.** However, in contrast to the latter, the working head comprises a mechanical insert coupling means 340 which is mechanically interconnected with an insert conveying means 760 that is configured to provide inserts to the insert receptive port 330. Thus inserts 100 can be conveyed e.g. from a magazine (not shown) arranged at a distance apart from the working head 300 and consequently total weight of the working head 300 can be decreased, leading to lower requirements with respect to the structural stability of the working head 300 and/or the actuator 730, 735.

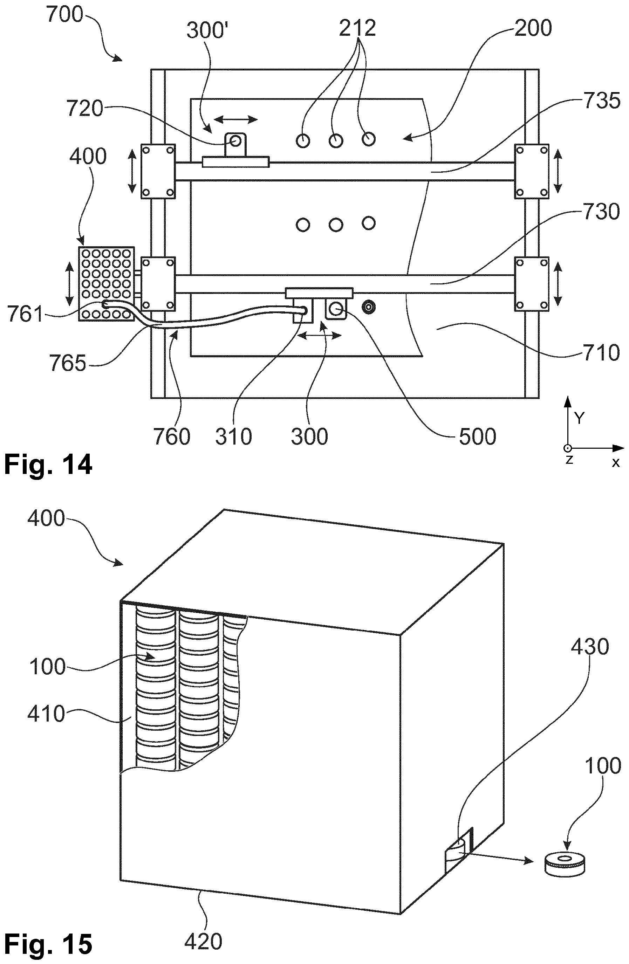

**Figure 14** schematically shows an embodiment of a machine system 700 for production of an insert system as described herein. The machine system comprises a holding device 710 for holding/supporting a panel 200. The holding device 710 may e.g. be formed as table comprising a vacuum system to hold the panel 200. The machine system 700 further comprises a first working head 300 arranged on a first actuator 730 that is displaceable with respect to the panel 200 and configured to support an insert (not shown in detail) to be inserted in an opening 212 in the panel 200. As shown, the first working head 300 comprises an insert holding means 310 arranged to mount an insert into an opening 21 2 in the panel 200, as well as an adhesive dispenser unit 500 as described herein to provide an adhesive agent to an opening 212 prior to mounting of an insert. The working head 300 is mechanically interconnected with a magazine 400 by means of an insert conveying means 760 configured to provide inserts, configured to convey inserts from the magazine to the working head 300. As shown, the magazine 400 is arranged at a distance apart from the holding device 710 but mechanically interconnected with the first actuator 730, such that it can move together with the fist actuator 730 along the holding device 710 but can be easily accessed e.g. in order to be replaced. The embodiment of a machine system 700 as shown further comprises a second working head 300' that is arranged at a second actuator 735 and is displaceable with respect to the first working head 300. The second working head 300' comprises an opening tool 720 to induce an opening 212 into the panel 200.

**Figure 15** schematically shows an embodiment of a magazine 400 . The magazine 400 comprises a storage part 410 in which multiple insert 100 are stored while being aligned in a specific way. The magazine 400 comprises a mechanical coupling means 420 (not visible) configured to establish a mechanical interconnection with a mating coupling means of a consumer device, such as a working head. The magazine 400 further comprises a insert delivery port 430 that is configured to deliver inserts 100 from the storage part 410 to an insert receptive port (not shown) of a consumer device (e.g. a working head or an insert conveying means) such that the insert 100 has a specified alignment.

### REFERENCE NUMERALS

- 1: Insert system
- 4: Magazine system
- 100: Insert
- 101: Chamber
- 110: Base
- 120: Outer skirt
- 121: Outer skirt end
- 123: First inner skirt surface
- 124: First outer skirt surface
- 125: Groove
- 130: Inner skirt
- 140: Slot
- 150: Portions
- 170: Guiding means
- 180: Fixation means
- 181: Thickening
- 182: Recess
- 200: Panel
- ) 210: First cover sheet
- 212: Opening
- 225: Undercut
- 230: Second cover sheet
- 250: Core structure
- 300, 300': Working head
- 310: Insert holding means

- 330: Insert receptive port
- 340: Mechanical insert coupling means
- 350: Guidance means
- 360: Working head carrier
- 400: Magazine
- 410: Storage part
- 420: Mechanical coupling means
- 430: Insert delivery port
- 500: Adhesive dispenser unit
- 510: Adhesive dispenser carrier
- 530: Nozzle
- 550: Storage tank
- 700: Machine system
- 710: Holding device
- 720: Opening tool
- 730: First actuator
- 735: Second actuator
- 750: Fluid line
- 755: Adhesive storage tank
- 760: Insert conveying means
- 761: Stationary insert receptive port
- 765: Tube

## Claims

1. An Insert (100) comprising
a. a base (110) and
b. an outer skirt (120) extending from
i. the base (110),thereby forming a chamber (101)
ii. said outer skirt (120) being provided with a first inner skirt surface (123) and a first outer skirt surface (124); and
c. at least one fixation means (180) arranged at the first outer skirt surface (124) and configured to interact with a panel (200) when inserted in an opening (212) of the panel (200) in order to increase initial insert stability, **wherein**
d. the insert (100) comprises an inner skirt (130)that extends from the base (110) and is arranged in the chamber (101) and spaced apart a distance from the outer skirt (120).

2. The insert (100) according to claim 1, **wherein** the fixation means (180) is arranged at the region of the outer skirt (120) which is adjacent to the base (110).

3. The insert (100) according to any of the preceding claim, **wherein** the fixation means (180) comprises at least one thickening (181) which at least partially protrudes from the first outer skirt surface (124).

4. The insert (100) according to claim 3, **wherein** multiple thickenings (181) are arranged circumferentially distributed around the outer skirt surface (124).

5. The insert (100) according to claim any of the preceding claims, **wherein** the fixation means (180) comprises at least one recess (182).

6. The insert (100) according to claim 5, **wherein** the recess extends in circumferential direction around the first outer skirt surface (124).

7. The insert (100) according to any of the preceding claims, **wherein** the fixation means (180) is at least partially made from a polymer material.

8. The insert (100) according to claim 7, **wherein** the polymer material comprises an adhesive agent.

9. The insert (100) according to any of claims 7 and 8, **wherein** the polymer material is arranged as a coating layer on the first outer skirt surface (124).

10. The insert (100) according to any of the preceding claims, **wherein** the fixation means (180) comprises a coating layer that has a friction coefficient which is higher than the friction coefficient of the non-coated part of the first outer skirt surface (124).

11. The insert (100) according to any of the preceding claims, **wherein** at least part of the fixation means (180) is integrally made with the outer skirt (120).

12. The insert (100) according to any of the preceding claims, **wherein** at least part of the fixation means (180) is made from a different material than the outer skirt (120).

13. The insert (100) according to any of the preceding claims, **wherein** at least one first groove (125) is arranged at the first outer skirt surface (124) closer to the free end (121) of the outer skirt (120) than to the base end of the outer skirt (120) which is arranged at the base (110).

14. The insert (100) according to any of the preceding claims, **wherein** the at least one outer skirt (120) comprises at least one slot (140) arranged at the free end (121) of the outer skirt (120) and extending from the inner skirt surface (123) to the outer skirt surface (124).

15. The insert (100) according to claim 14, **wherein** multiple slots (140) are arranged circumferentially distributed around the outer skirt surface (124).

16. The insert (100) according to claim 15, **wherein** the portions (150) of the outer skirt (120) arranged between the multiple slots (140) form resilient tongues.

17. An Insert system (1), comprising
a. a panel (200) comprising
i. a core structure (250) and
ii. a first cover sheet (210) that at least partially covers the core structure (250); and
b. an insert (100) according to any of claims 1 to 16
i. the insert (100) being mounted in an opening (212) in the panel (200).

18. The insert system (1) according to claim 17, **wherein** when the insert (100) is mechanically interconnected with the panel (200) by means of an interference-fit between the fixation means (180) and the first cover sheet (210).

19. The insert system (1) according to any of claims 17 and 18, **wherein** the opening (220) comprises an undercut (225) arranged beneath the first cover sheet (210).

## Patentansprüche

1. Einsatz (100), umfassend:
a. eine Basis (110) und
b. eine äußere Schürze (120), die sich von
i. der Basis (110) erstreckt, wodurch eine Kammer (101) gebildet wird,
ii. wobei die äußere Schürze (120) mit einer ersten inneren Schürzenoberfläche (123) und einer ersten äußeren Schürzenoberfläche (124) ausgestattet ist, und
c. mindestens ein Fixiermittel (180), das an der ersten äußeren Schürzenoberfläche (124) angeordnet ist und ausgestaltet ist, um mit einer Panele (200) zusammenzuwirken, wenn es in eine Öffnung (212) der Panele (200) eingeführt wird, um die Anfangseinsetzstabilität zu erhöhen, **wobei**
d. der Einsatz (100) eine innere Schürze (130) umfasst, die sich von der Basis (110) erstreckt und in der Kammer (101) angeordnet ist und in einem Abstand von der äußeren Schürze (120) beabstandet ist.

2. Einsatz (100) nach Anspruch 1, **wobei** das Fixiermittel (180) an der Region der äußeren Schürze (120) angeordnet ist, die sich benachbart zu der Basis (110) befindet.

3. Einsatz (100) nach einem der vorhergehenden Ansprüche, **wobei** das Fixiermittel (180) mindestens eine Verdickung (181) umfasst, die mindestens teilweise aus der ersten äußeren Schürzenoberfläche (124) vorspringt.

4. Einsatz (100) nach Anspruch 3, **wobei** mehrere Verdickungen (181) im Umfang um die äußere Schürzenoberfläche (124) verteilt angeordnet sind.

5. Einsatz (100) nach einem der vorhergehenden Ansprüche, **wobei** das Fixiermittel (180) des Weiteren mindestens eine Aussparung (182) umfasst.

6. Einsatz (100) nach Anspruch 5, **wobei** die Aussparung sich in Umfangsrichtung um die erste äußere Schürzenoberfläche (124) herum erstreckt.

7. Einsatz (100) nach einem der vorhergehenden Ansprüche, **wobei** das Fixiermittel (180) mindestens teilweise aus einem Polymermaterial gefertigt ist.

8. Einsatz (100) nach Anspruch 7, **wobei** das Polymermaterial einen Klebstoff umfasst.

9. Einsatz (100) nach einem der Ansprüche 7 und 8, **wobei** das Polymermaterial als Beschichtungsschicht auf der ersten äußeren Schürzenoberfläche (124) angeordnet ist.

10. Einsatz (100) nach einem der vorhergehenden Ansprüche, **wobei** das Fixiermittel (180) eine Beschichtungsschicht umfasst, die einen Reibungskoeffizienten aufweist, der höher als der Reibungskoeffizient des unbeschichteten Teils der ersten äußeren Schürzenoberfläche (124) ist.

11. Einsatz (100) nach einem der vorhergehenden Ansprüche, **wobei** mindestens ein Teil des Fixiermittels (180) integral mit der äußeren Schürze (120) hergestellt ist.

12. Einsatz (100) nach einem der vorhergehenden Ansprüche, **wobei** mindestens ein Teil des Fixiermittels (180) aus einem anderen Material als die äußere Schürze (120) hergestellt ist.

13. Einsatz (100) nach einem der vorhergehenden Ansprüche, **wobei** mindestens eine erste Rille (125) an der ersten äußeren Schürzenoberfläche (124) näher an dem freien Ende (121) der äußeren Schürze (120) als an dem Basisende der äußeren Schürze (120) angeordnet ist, das an der Basis (110) angeordnet ist.

14. Einsatz (100) nach einem der vorhergehenden Ansprüche, **wobei** die mindestens eine äußere Schürze (120) mindestens einen Schlitz (140) umfasst, der an dem freien Ende (121) der äußeren Schürze (120) angeordnet ist und sich von der inneren Schürzenoberfläche (123) zu der äußeren Schürzenoberfläche (124) erstreckt.

15. Einsatz (100) nach Anspruch 14, **wobei** mehrere Schlitze (140) am Umfang um die äußere Schürzenoberfläche (124) verteilt angeordnet sind.

16. Einsatz (100) nach Anspruch 15, **wobei** die Anteile (150) der äußeren Schürze (120), die zwischen den mehreren Schlitzen (140) angeordnet sind, federnde Zungen bilden.

17. Einsatzsystem (1), umfassend:
a. eine Panele (200), umfassend:
i. eine Kernstruktur (250) und
ii. eine erste Abdecklage (210), die mindestens teilweise die Kernstruktur (250) bedeckt; und
b. einen Einsatz (100) nach einem der Ansprüche 1 bis 16,
i. wobei der Einsatz (100) in einer Öffnung (212) in der Panele (200) montiert wird.

18. Einsatzsystem (1) nach Anspruch 17, **wobei** der Einsatz (100) mechanisch mittels einer Presspassung zwischen dem Fixiermittel (180) und der ersten Abdecklage (210) mit der Panele (200) verbunden ist.

19. Einsatzsystem (1) nach einem der Ansprüche 17 und 18, **wobei** die Öffnung (220) eine Hinterschneidung (225) umfasst, die unter der ersten Abdecklage (210) angeordnet ist.

## Revendications

1. Insert (100) comprenant
a. une base (110) et
b. une jupe externe (120) s'étendant à partir de
i. la base (110), formant ainsi une chambre (101)
ii. ladite jupe externe (120) étant pourvue d'une première surface de jupe interne (123) et d'une première surface de jupe externe (124); et
c. au moins un moyen de fixation (180) agencé au niveau de la première surface de jupe externe (124) et configuré pour interagir avec un panneau (200) lorsqu'il est inséré dans une ouverture (212) du panneau (200) afin d'augmenter la stabilité initiale de l'insert, **dans lequel**
d. l'insert (100) comprend une jupe interne (130) qui s'étend à partir de la base (110) et est agencée dans la chambre (101) et espacée d'une distance de la jupe externe (120) .

2. Insert (100) selon la revendication 1, **dans lequel** le moyen de fixation (180) est agencé au niveau de la région de la jupe externe (120) qui est adjacente à la base (110).

3. Insert (100) selon l'une quelconque des revendications précédentes, **dans lequel** le moyen de fixation (180) comprend au moins un épaississement (181) qui fait saillie au moins partiellement à partir de la première surface de jupe externe (124).

4. Insert (100) selon la revendication 3, **dans lequel** de multiples épaississements (181) sont agencés répartis de façon circonférentielle autour de la surface de jupe externe (124).

5. Insert (100) selon l'une quelconque des revendications précédentes, **dans lequel** le moyen de fixation (180) comprend au moins un évidement (182).

6. Insert (100) selon la revendication 5, **dans lequel** l'évidement s'étend dans une direction circonférentielle autour de la première surface de jupe externe (124) .

7. Insert (100) selon l'une quelconque des revendications précédentes, **dans lequel** le moyen de fixation (180) est au moins partiellement constitué d'un matériau polymère.

8. Insert (100) selon la revendication 7, **dans lequel** le matériau polymère comprend un agent adhésif.

9. Insert (100) selon l'une quelconque des revendications 7 et 8, **dans lequel** le matériau polymère est agencé en tant que couche de revêtement sur la première surface de jupe externe (124).

10. Insert (100) selon l'une quelconque des revendications précédentes, **dans lequel** le moyen de fixation (180) comprend une couche de revêtement qui a un coefficient de frottement qui est supérieur au coefficient de frottement de la partie non revêtue de la première surface de jupe externe (124).

11. Insert (100) selon l'une quelconque des revendications précédentes, **dans lequel** au moins une partie du moyen de fixation (180) est constituée d'un seul tenant avec la jupe externe (120).

12. Insert (100) selon l'une quelconque des revendications précédentes, **dans lequel** au moins une partie du moyen de fixation (180) est constituée d'un matériau différent de celui de la jupe externe (120).

13. Insert (100) selon l'une quelconque des revendications précédentes, **dans lequel** au moins une première rainure (125) est agencée au niveau de la première surface de jupe externe (124) plus près de l'extrémité libre (121) de la jupe externe (120) que de l'extrémité de base de la jupe externe (120) qui est agencée au niveau de la base (110).

14. Insert (100) selon l'une quelconque des revendications précédentes, **dans lequel** l'au moins une jupe externe (120) comprend au moins une fente (140) agencée au niveau de l'extrémité libre (121) de la jupe externe (120) et s'étendant de la surface de jupe interne (123) à la surface de jupe externe (124).

15. Insert (100) selon la revendication 14, **dans lequel** de multiples fentes (140) sont agencées réparties de façon circonférentielle autour de la surface de jupe externe (124).

16. Insert (100) selon la revendication 15, **dans lequel** les portions (150) de la jupe externe (120) agencées entre les multiples fentes (140) forment des languettes élastiques.

17. Système d'insert (1) comprenant
a. un panneau (200) comprenant
i. une structure de noyau (250) et
ii. une première feuille de couverture (210) qui recouvre au moins partiellement la structure de noyau (250); et
b. un insert (100) selon l'une quelconque des revendications 1 à 16
i. l'insert (100) étant monté dans une ouverture (212) dans le panneau (200).

18. Système d'insertion (1) selon la revendication 17, **dans lequel** lorsque l'insert (100) est interconnecté mécaniquement avec le panneau (200) au moyen d'un ajustement serré entre le moyen de fixation (180) et la première feuille de couverture (210).

19. Système d'insertion (1) selon l'une quelconque des revendications 17 et 18, **dans lequel** l'ouverture (220) comprend une sous-coupé (225) agencée sous la première feuille de couverture (210).
